# EUROPEAN PATENT APPLICATION

(11) **EP 2 667 651 A1**
(43) Date of publication of application: **27.11.2013**
(21) Application number: 12169369.1
(22) Date of filing: 24.05.2012
(51) Int. Cl.: H04W 16/14

(54) **Method and apparatus for radio resource management**

(71) Applicant: FUJITSU LIMITED, Kawasaki-shi, Kanagawa 211-8588 (JP)
(72) Inventor: Bucknell, Paul, Brighton, Sussex BN1 1SP (GB); Tesanovic, Milos, Hayes, Middlesex UB4 8FE (GB); Chebbo, Hind, Uxbridge, Sussex UB8 3SY (GB)
(74) Representative: Fenlon, Christine Lesley

(57) **Abstract**

A method for managing radio resources among first and second radio communication systems comprises communicating, by the first radio communication system, first scheduling information indicative of radio resources of the first radio communication system potentially available for use by devices of the second radio communication system; communicating, by the first radio communication system or an entity external to the first and second radio communication systems, additional information pertaining to usage of said radio resources by one or more devices of the second radio communication system; and accessing, by said one or more devices of the second radio communication system, radio resources of the first radio communication system in accordance with the first scheduling and additional information.

## Description

### Field of the Invention

The present invention generally relates to radio resource management and in particular, but not exclusively, to enabling the efficient use of radio resources for machine-type communications.

### Background of the Invention

Radio access networks are typically deployed using licensed spectrum bought by one or more operators, who seek to utilise their spectrum in the most cost efficient and revenue generating manner as possible. Increasingly, operators will have access to multiple radio access networks in different radio frequency bands.

Opportunistic spectrum-scheduling schemes for multichannel cognitive radio networks are known. In such schemes, two sets of users can be considered, namely the Primary User (PU) and the Secondary User (SU). The PU is normally the licensed user of the spectrum or a user recognised as having high priority for the spectrum band. In this specification, the terms PU and SU denote not only individual devices (e.g., terminals or base stations) of the primary and secondary systems, but also, where the context allows, the primary or secondary system as a whole.

The SU is an opportunistic (normally unlicensed) user who accesses and uses spectrum resources on a temporary basis when PUs are not making use of the spectrum. Access of this kind is one aspect of so-called "cognitive radio". The PU activity and channel quality (signal-to-noise ratio (SNR) at the receiving SU) vary on a slot-by-slot basis. Scheduling is performed at the beginning of a frame, which may consist of multiple slots. A scheduling algorithm estimates the expected number of packets that can be transmitted over the frame by each SU for each licensed spectrum resources. Based on these expected packet transmissions, a central scheduler allocates the licensed spectrum resources to the SUs. The objective of the scheduling algorithm is to allocate the licensed spectrum resources to maximize the aggregate throughput of the SUs.

One example for increasing the radio environmental and spectral awareness of future wireless systems is described in "A Novel Spectrum Scheduling Scheme for Multichannel Cognitive Radio Network and Performance Analysis" (V. K. Tumuluru, P. Wang, and D. Niyato, IEEE Transactions on Vehicular Technology, Vol. 60, No. 4, 2011). Radio Environment Maps utilized by Cognitive Radios form the foundation of the work, which is further complemented development of new spectrum sensing techniques, data processing algorithms, and applications such as radio resource management solutions.

Where wireless communication is being employed, radio resources may be used to send information to multiple destinations. These destinations may reside in different locations, and thus, more than one radio resource may be employed in a single device in order to address these communication needs. Furthermore, the suppliers and consumers of electronic information need not operate using the same forms of communication, so these devices must be able to change radio configuration in order to support constrained applications (e.g., processing, size or power limited).

As different wireless standards may operate in the same or similar radio spectrum, interference may occur when the standards operate concurrently. This is especially the case when transmitters and/or receivers are in close proximity, such as in an apparatus that supports multiple wireless transmission techniques.

It is well known that signal-related information from devices can be analysed in order to predict expected signal activity within particular environments. The expected signal activity may then be compared to a network scan schedule. Typically, a scan schedule may comprise pre-defined periodic instances during which a device may scan. The device may scan for signals in an environment in order to identify other devices with which interference should be avoided.

For example, in TV white space systems, devices with which interference should be avoided may include legacy apparatuses whose operation is protected according to government regulations. Typically the scan schedule is used for the SU to look for signal activity of the PU and then the SU will adjust the scan schedule to avoid interference with the PU. To be effective, scanning should take place during periods of minimal signal activity in the environment. Signal activity that may conflict with scheduled scan instances may be identified by comparing the scheduled scan instances to the expected signal activity. A conflict may arise if, for example, signal activity is predicted to occur during a scan instance. Any potentially conflicting scan instances may be altered to avoid the conflict. For example, potentially conflicting scan instances may be moved forward in time within the scan schedule so that they are aligned with periods of time where minimal signal activity is expected. The scan schedule may then be transmitted to the one or more apparatuses to update the apparatuses (PU and SU) to the most current scan schedule. A clear advantage of this is that devices may then operate using the same scan schedule that executes scanning during periods of minimal signal in the environment.

After determination of the available radio resources available for signal activity the devices can utilise the radio resources for optimum signal activity transmission and reception. The scan schedule may be regarded as a schedule of potential transmission or reception opportunities for the SU. It may still be necessary for the SU to determine an actual transmission slot within the scan schedule by monitoring the local radio signal activity. Typically devices will communicate to each other in order to minimise the amount of possible interference to other devices in close proximity.

In the context of opportunistic spectrum-scheduling schemes, Machine Type Communications (MTC) has received considerable attention. MTC is a form of communication to support machine-to-machine solutions which are a combination of devices, software and services that operate with little or nor human interaction. MTC is different from current communication models as it involves new or different market scenarios. Potentially it involves very large number of communicating entities (MTC devices) with typically smaller amounts of traffic per device. Examples of such applications include fleet management, smart metering, home automation, and e-health.

MTC has the potential to generate significant revenues for mobile network operators. The ubiquitous coverage of mobile networks is one main enabler. However for mobile networks to be competitive for mass machine-type applications, it is important to optimise their support for MTC. Current mobile networks are optimally designed for human-to-human communications, but are less optimal for machine-to-machine, machine-to-human, or human-to-machine applications. It is also important to enable network operators to offer MTC services at a low cost level, to match the expectations of mass-market machine-type services and applications.

However, MTC devices may be limited in their processing capability, battery power, or by other factors. Consequently it is desirable to minimise the burden on individual MTC devices in determining available radio resources.

Meanwhile, the PU may wish to exert some control over use of its licensed spectrum by SU devices. It would be desirable if the PU could assist approved SU devices, or classes of device, in making use of its resources whilst excluding non-approved devices.

As will be appreciated from the above, there is consequently a need for improved radio resource management schemes.

### Summary of the Invention

Embodiments of the invention are directed to a radio resource sharing scheme to enable the efficient use of radio access network resources for machine-type communications.

According to an embodiment of an aspect of the invention, there is provided a method for managing radio resources among first and second radio communication systems, the method comprising communicating, by the first radio communication system, first scheduling information indicative of radio resources of the first radio communication system potentially available for use by devices of the second radio communication system; communicating, by the first radio communication system or by an entity external to the first and second radio communication systems, additional information pertaining to usage of said radio resources by one or more devices of the second radio communication system; and accessing, by said one or more devices of the second radio communication system, radio resources of the first radio communication system in accordance with the first scheduling information and additional information.

Here, the "first radio communication system" corresponds to the PU referred to elsewhere. The "second radio communication system" corresponds to the SU.

Embodiments of the present invention thus provide a method of radio resource sharing in which the PU co-operates with the SU at least to the extent of facilitating analysis by the SU of available radio resources, but in which the PU need not take any part in SU scheduling at the device level. On the other hand, embodiments of the present invention also include the possibility of PU involvement in the SU scheduling, for example by allowing or prohibiting certain classes of SU device from accessing its radio resources. In some embodiments, certain device classes of second radio communication system are prohibited from accessing the radio resources for certain periods of time, for example for n seconds, where the value of n is configurable and has been signalled to the devices of the second radio communication system in advance.

The entity external to the first and second radio communication systems may communicate the additional information to devices of the first radio communication system as well as to devices of the second radio communication system.

In one embodiment, the additional information is transmitted to the one or more devices of the second radio communication system on a control channel of the first radio communication system. The additional information may, for example, indicate the current load on radio resources in the first radio communication system. This information may also be transmitted to devices of the first radio communication system.

This benefits the second radio communication system and assists the first radio communication system in allocating the available radio resources of the first radio communication system to devices of the second radio communication system.

In one embodiment, the additional information is transmitted to a terminal device of the second radio communication system.

In one embodiment, the additional information is transmitted to a base station device of the second radio communication system.

In one embodiment, at least the first scheduling information is communicated by the first radio communication system to the entity external to the first and second radio communication systems, for example over a wired network, the entity allocating resources to the one or more devices in response to a request thereby and updating the scheduling information in accordance with the allocating. Communicating the first scheduling information in this way reduces the amount of subsequent wireless signalling required.

In one embodiment, devices of the second system are assigned to at least one access class, either the first scheduling information indicating or the additional information one or more access classes of devices permitted to access radio resources of the first radio communication system.

In one embodiment, the one or more access classes of devices are determined based on radio resource requirements.

In one embodiment, at least a portion of the first scheduling information is scrambled, at least one device of the one or more access classes of devices having a key to unscramble at least some of the scrambled scheduling information.

In one embodiment, the first scheduling information comprises a system broadcast information message in a Long Term Evolution system.

In one embodiment, the first radio communication system communicates information specifying devices of the second radio communication system permitted to use the resources in return for assisting users of the first radio communication system. In this way, devices of the second radio communication system that are able to offer a benefit to the first radio communication system may be allocated radio resource in exchange.

In one embodiment, the method further comprises transmitting, by one or more devices of the second radio communication system to the first radio communication system, information indicative of a result of an analysis of the radio resources of the first radio communication system potentially available for use by devices of the second radio communication system. The analysis of radio resources by devices of the second radio communication system may be based on signal characteristics, such as signal strength and interference power, and/or geographic location information (if available). Reporting the analysis to the first radio communication system allows the first radio communication system to better allocate any available radio resources to devices of the second radio communication system and also allows the first radio communication system to have better knowledge of its own detailed coverage area and potentially improve its system coverage. Alternatively, or in addition, the base station may perform its own analysis of the potentially available radio resources, the result of which may be combined with the analysis results reported by the device or devices of the second radio communication system.

In one embodiment, devices of the second system comprise machine-type devices.

According to an embodiment of an aspect of the invention, there is provided a method for managing radio resources by a base station of a first radio communication system, the method comprising communicating first scheduling information indicative of radio resources of the first radio communication system potentially available for use by devices of a second radio communication system; and communicating additional information pertaining to usage of said radio resources by said devices of said second radio communication system.

In one embodiment, the method further comprises receiving, from one or more devices of the second radio communication system, information indicative of a result of an analysis of a characteristic of the radio resources performed by the one or more devices of the second radio communication system.

According to an embodiment of an aspect of the invention, there is provided a base station for managing radio resources of a first radio communication system, the base station comprising means for communicating first scheduling information indicative of radio resources of the first radio communication system potentially available for use by devices of a second radio communication system; and means for communicating additional information pertaining to usage of said radio resources by said devices of the second radio communication system.

According to an embodiment of an aspect of the invention, there is provided a method for accessing radio resources of a first radio communication system by a terminal device of a second radio communication system, the method comprising receiving first scheduling information indicative of radio resources of the first radio communication system potentially available for use to gain initial access; and receiving additional information pertaining to said radio resources to enable continued access to the radio resources.

In one embodiment, the method further comprises analysing a characteristic of the radio resources; and transmitting, to the second radio communication system, information indicative of a result of said analysing.

According to an embodiment of an aspect of the invention, there is provided a terminal for accessing radio resources of a radio communication system to which the terminal does not belong, the terminal comprising means for receiving first scheduling information indicative of radio resources of the radio communication system potentially available for use to gain initial access; and means for receiving additional information pertaining to said radio resources to enable continued access to the radio resources. According to an embodiment of an aspect of the invention, there is provided a central control entity for the first and second systems referred to above, arranged to receive at least said first scheduling information communicated from the first system and to make said first scheduling information available to the second system.

According to further embodiments of an aspect of the present invention, there is provided program code which, when executed by a processor of radio transceiver equipment, provides the base station or terminal as defined above. Such program code may be stored on a computer-readable medium.

### Brief Description of the Drawings

Specific embodiments of the present invention will be described in further detail with reference to the appended drawings. It will be appreciated that this is by way of example only, and should not be viewed as limiting.
Figure 1 is a schematic diagram of radio communication systems to which an embodiment of the present invention may be applied;
Figure 2 is a flowchart of a radio resource sharing method according to an embodiment;
Figure 3 is a schematic diagram of radio communication systems sharing radio resources according to an embodiment;
Figure 4 is a schematic diagram of radio communication systems sharing radio resources according to another embodiment;
Figure 5 is a schematic diagram of radio communication systems sharing radio resources according to another embodiment;
Figures 6a to 6c illustrate how Extended Access Class Barring (EAB) for MTC can be used to allocate radio resource sharing according to an embodiment;
Figure 7 is a schematic diagram of a base station device according to an embodiment; and
Figure 8 is a schematic diagram of a terminal according to an embodiment.

### Detailed Description

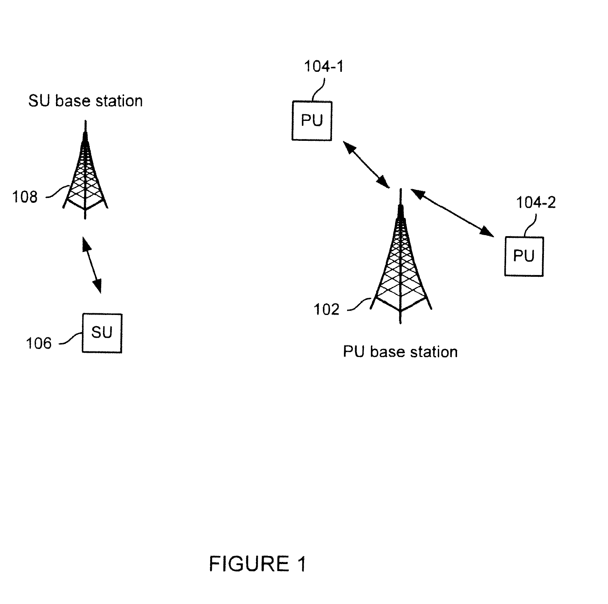

The invention will be described with reference to a particular embodiment applied to two radio communication systems, as illustrated in figure 1. A first one of the radio communication systems comprises base station 102 and terminals 104-1, 104-2 and a second one of the radio communication systems comprises base station 108 and terminal 106. It is assumed that communication is possible between the two systems. The base stations 102, 108 may each be connected to a wired backhaul network, the backhaul networks being linked via the Internet or in some other way. Alternatively, the respective base stations may be capable of communicating wirelessly with each other.

In this particular embodiment, terminal 106 is a MTC device. For purposes of this example, it is assumed that the first radio communication system operates using GSM/GPRS radio resources which are underused or used only at specific pre-defined time intervals, and that the second radio communication system uses a different radio access technology, such as either UMTS or LTE. The second radio communication system wishes to use the spare bandwidth of the first radio communication system for transmission of MTC traffic at times when no GSM/GPRS signals are being transmitted. As such, the first radio communication system may be referred to as the primary user (PU) of the spectrum, and the second communication system as the secondary user (SU) of the spectrum.

However, the reader will appreciate that the concept of division between PU and SU is for the purpose of describing the present invention clearly and with regard to the prior art, and an actual implementation could be provided using technologies other than GSM, GPRS, UMTS, and LTE and without the distinction between PU and SU being made, either explicitly or implicitly. Similarly, it is to be understood that the present invention, in all its possible embodiments, can be applied to human-to-human communications, machine-to-machine communications, machine-to-human communications, or human-to-machine communications.

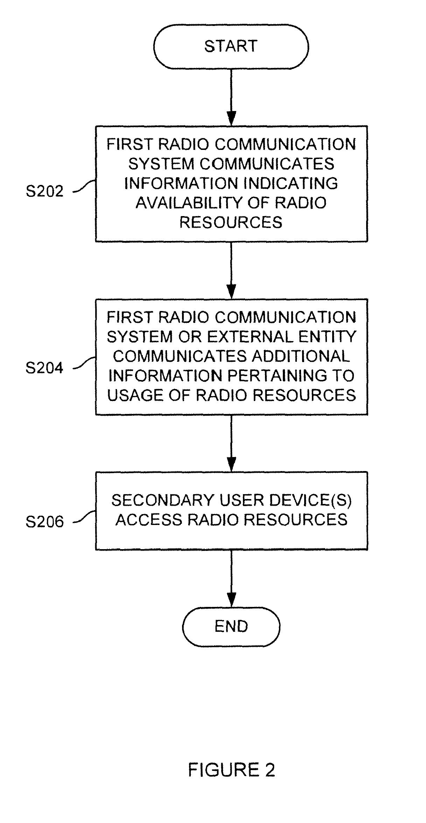

Figure 2 is a flowchart of the main steps involved in a radio resource sharing scheme embodying the invention.

In step S202, the PU system communicates information indicative of potentially available radio resources to the SU system, either directly or indirectly. Broadly speaking, this means that one or more devices of the PU system can communicate this information to one or more devices of the SU system, or to an entity external, but accessible, to the PU and SU systems. There are at least four possible ways in which the PU and SU systems can cooperate, compared to the situation where devices of the PU and SU systems simply monitor available resources in order to avoid any mutual interference.

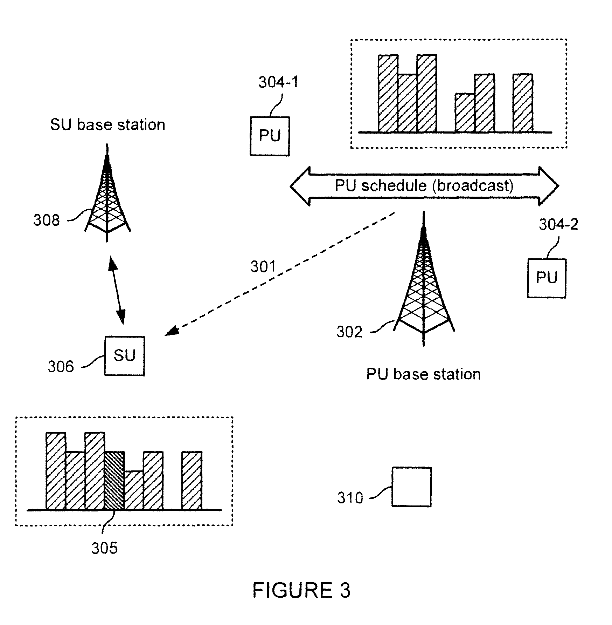

In a first approach, the PU system transmits information about available radio resources to the SU system. This implies that the PU system can predict in advance when radio resources will not be required by the PU devices. Such information could be sent either directly to specific SU device(s) or broadcast to a number of SU devices at the same time. In particular, a broadcast may either be targeted explicitly at the SU system or may be directed to PU devices but also received by SU devices. For example, as illustrated in figure 3, PU base station 302 broadcasts a PU schedule for PU terminals 304-1, 304-2 that is also received by SU base station 308 and SU terminal 306.

In a second approach, the SU system may explicitly request the information from the PU system. For example, the SU system may transmit directly to the PU system, using the PU radio access network, an indication that it would like to use available radio resource of the PU system. Such a request may include some indication of the quantity of radio resources needed, as well as other indications such as delay tolerance and required transmission power.

In a third approach, which effectively combines the first and second approaches, information is broadcast by the PU system to the SU system and also requested by the SU system from the PU system. Such information exchange can be handled directly between PU and SU base stations 302, 308 or through PU and SU terminals 304, 306.

In a fourth approach, the information indicative of available PU radio resources may be transmitted to an entity 310 external, but accessible, to the PU and SU systems. Access could be either through the wireless radio access technologies implemented by the PU and SU systems (e.g. GSM/GPRS and LTE, respectively) or by other access technologies such as wired networking technologies.

It will be appreciated that the aforementioned approaches may be combined in any suitable manner, and that other approaches may be used.

Referring again to figure 2, in step S204, the PU system or the entity external to the PU and SU systems communicates additional information pertaining to usage of the available radio resources. In particular, although SU devices may determine the PU schedule based on the information transmitted in step S204, it is possible for the PU system to transmit additional information in order to aid and/or control the usage of available PU radio resources. For example, as shown in figure 3, the PU base station 302 may send additional information 301 directly to SU terminal 306, though it will be understood that the additional information could also be transmitted to or from the external entity 310.

In some embodiments, the additional information 301 is transmitted using a control channel of the PU system. For example, in the case of a PU system implementing GSM, the GSM control channels can be used.

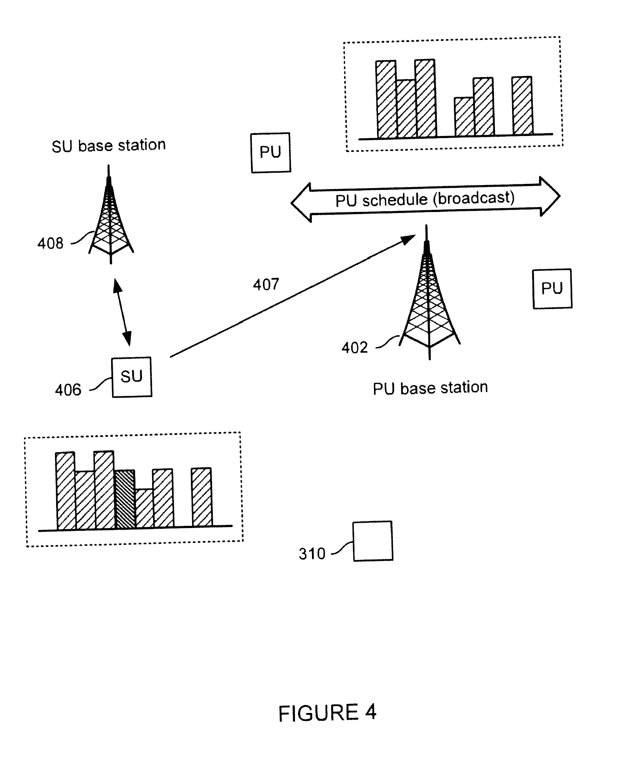

In some embodiments, the additional information is transmitted in response to a request by the SU terminal. This is shown in figure 4, where SU terminal 406 requests 407 the additional information from the PU base station 402. (Request 407 occurs before transmission 403 between SU device 406 and SU base station 408).

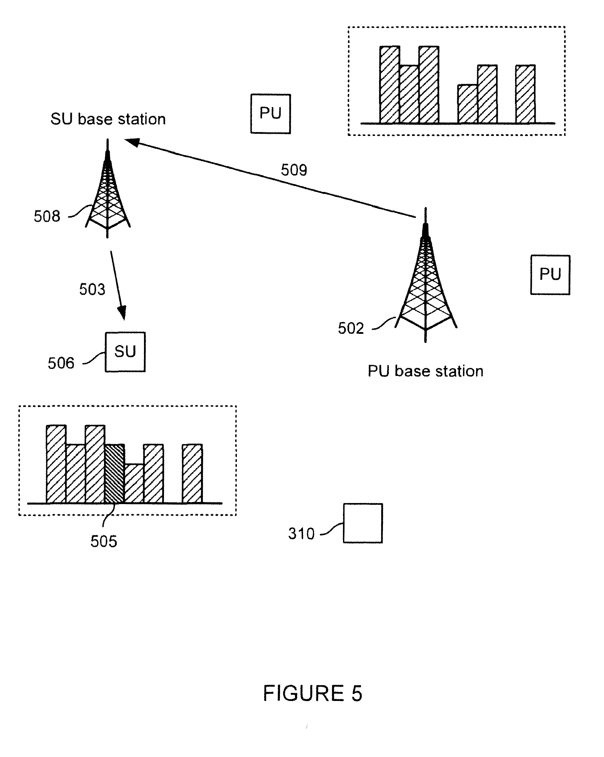

It is contemplated that, in some embodiments, after some initial information indicating availability of PU radio resources has been received by SU system (step S202 of figure 2), the additional information pertaining to usage of the PU radio resources is sent to the SU device over an application or service level layer protocol. This is shown in figure 5. As illustrated, the additional information is first transmitted 509 from the PU base station 502 to SU base station 508, and then transmitted 503 from the SU base station 508 to the SU device 506. In this case, the PU base station 502 still has some control over SU transmission in an available location 505 among scheduled PU transmissions.

On the basis of the information indicating availability of radio resources of the PU system and the additional information, one or more SU devices access radio resources of the PU system (step S206 of figure 2).

As noted earlier, the PU system may wish to retain some control over the use of its available radio resources. One reason for this is that the PU will often have the sole licence for use of certain frequencies in a given geographical area. Allowing use of those frequencies freely by any SU devices is unlikely to be acceptable to the PU operator. If, on the other hand, SU devices are able to provide some benefit to the PU operator or its users, the PU may be more inclined to grant access. Examples of such a benefit would include provision of emergency coverage, ability to provide fill-in coverage in a coverage hole or hotspot, or relay capability. Whether or not a SU device can provide such services will typically depend on the device characteristics in terms of device performance and capabilities.

In some embodiments, the entity external to the PU and SU systems acts as a broker that accepts requests from SU devices and allocates available PU radio resources that have been donated by the PU system, in accordance with any prescribed conditions. For example, PU radio resources might be available for only certain so-called "Access Classes", which are described in more detail later. As such, the external entity may allocate PU resources based on one or both of the PU schedule and the additional information, and actively control the allocation of available PU radio resources. In embodiments, the external entity allocates available resources from several different PU operators that each own different radio spectrum resources.

In some embodiments, the PU system makes use of the Extended Access Class Barring (EAB) mechanism of the LTE standard to control the use of spare bandwidth, by allowing only certain classes of device access to use certain pre-defined radio resources.

By way of background, Access Class Barring (ACB) may be used to prevent terminals (which will be referred to as User Equipment or UE to conform to the language used in the LTE standard) from making access attempts (including emergency call attempts) or responding to pages in specified areas of a Public Land Mobile Network (PLMN). All UEs are members of one out of ten randomly allocated mobile populations, defined as Access Classes 0 to 9. In addition, UEs may be members of one or more out of 5 special categories (Access Classes 11 to 15). These are typically allocated to specific high priority users.

Extended Access Class Barring (EAB) allows the operator(s) to control mobile originating access attempts from UEs that are configured for EAB in order to prevent overload. An additional control bit known as "Access Class 10" is signalled to UEs. This indicates whether or not network access for Emergency Calls is allowed for UEs with access classes 0 to 9 or without an International Mobile Subscriber Identity (IMSI). For UEs with access classes 11 to 15, Emergency Calls are not allowed if both "Access Class 10" and the relevant Access Class (11 to 15) are barred. Otherwise, Emergency Calls are allowed.

Access restrictions are checked by UEs during the Radio Resource Control (RRC) connection establishment procedure. The RRC connection establishment is used to make the transition from RRC Idle mode to RRC Connected mode. UEs must make the transition to RRC Connected mode before transferring any application data. More specifically, EAB uses a bitmap based barring mechanism comprising the following steps:
- Prior to establishing an RRC connection that is subject to EAB, the UE is required to acquire the System Information Block (SIB) containing the EAB parameters;
- An EAB check subprocedure is performed before the Access Class Barring (ACB) check;
- The EAB check subprocedure specifies whether or not emergency and mobile terminated calls are barred as well as whether or not the UE can access the cell using Access Classes 11 to 15;
- If EAB access is barred, upper layers are informed;
- If EAB access is not barred, the ACB check is performed; and
- If the newly defined SIB for EAB is scheduled, but the UE is unable to acquire it, the UE treats the cell as if essential system information is missing.

The barring bitmap is used to distribute the Physical Random Access Channel (RACH) attempts among UEs, so that a UE which is barred will be barred until the bitmap is updated in the EAB information. One existing EAB information update mechanism for LATE includes:
- Not subject to System Information (SI) modification period + immediately acquire the EAB info upon the reception of EAB info update indication in paging (ETWS-like);
- Not subject to SI modification period + always mandate acquiring the EAB info before access;
- Not subject to SI modification period + notification of EAB info update in paging (ETWS-like) + re-acquisition of the EAB info before access only when one or more EAB info update indications have been received.

In embodiments, the above known concept of ACB is applied to radio resource sharing between PU and SU. That is, certain classes of devices are allowed to use certain pre-defined PU radio resources based on their already pre-defined (before transmission is started) Access Class. It will be appreciated that this defines a new function for the Access Classes: instead of the Access Class being used to bar certain devices, in embodiments the Access Class serves to define a transmission opportunity for a SU device. The Access Class(es) employed here need not correspond to Access Classes already defined in existing communications standards such as LTE. For example, a new Access Class for SU devices may be set up as part of the specifications of the PU system.

It will be apparent that two or more SU devices may have the same Access Class and may attempt to use the same PU radio resources at the same time. A number of contention resolution mechanisms can be employed. For example, a random back off period can be applied to subsequent attempts to use the PU radio resource.

In one embodiment, the PU and SU systems share a "key" (e.g., a security key such as a scrambling key, masking key, encryption key or the like) which is used to protect the individual fields of the aforementioned bitmap so that only targeted SU devices which successfully descramble the relevant field are allowed to use the PU resource. The key could be used by a single SU device or entire groups of SU devices. For example, the key is distributed to a number of SU devices, and contention resolution among these SU devices is performed according to any mechanism already existing in the SU system. However, the key itself may be used for contention resolution, and this is particularly useful when the number of SU devices is small, for example in a household where the PU system comprises a Home e-NodeB (this being one form of base station employed in LTE), and where MTC devices are deployed in the household and communicate using the SU system.

Available PU radio resources that may be used by the SU devices can be defined using semi-static control signalling on the SU system, and defined PU radio resources may be used until they are re-defined in the SU system. This implies that there is some exchange of information between the PU and SU systems network before the new definition is applied.

This could be used as part of the contention resolution for multiple SU devices requesting access to PU resources by assigning a specific key to a SU system or device which the PU system decides as appropriate.

Specifying which of the available PU radio resources can be used by SU devices based on their Access Class can be achieved in a number of ways. For example, the entity external to the PU and SU systems may allocate available PU radio resources to SU devices according to their Access Classes. Alternatively , the PU base station may identify SU devices belonging to certain Access Classes based on Uplink signalling from the SU devices, for example buffer status reports that SU devices send to the SU access points, or based on Downlink signalling to the SU devices, for example resource allocation messages sent by the SU access point.

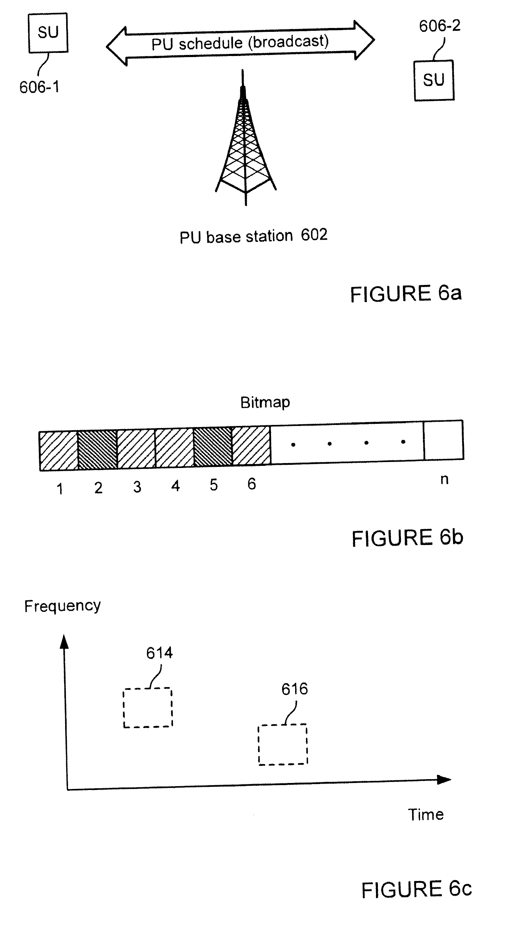

Figures 6a to 6c illustrate how Extended Access Class Barring (EAB) for MTC can be used to allocate radio resource sharing. As illustrated in figure 6a, two SU devices 606-1, 606-2 are configured to search for certain signals sent as part of a PU schedule broadcast by the PU base station 602. It will be recalled by the reader that EAB uses a bitmap based barring mechanism, and an exemplary bitmap is schematically illustrated in figure 6b where the bit fields denoted "2" and "5" represent the signals that are being searched for by SU devices 606-2 and 606-2, respectively. Upon finding the particular occurrence of the signal in the bitmap, the SU device is permitted to use a time-frequency PU radio resources defined by the particular location of the signal in the bitmap. This is shown in figure 6c, where radio resources 614 and 616 correspond to bit fields "2" and "5" of the bitmap, respectively. A SU device may identify the signal using various mechanisms. For example, the SU device may search for the signal at a known location of the bitmap. This may be combined with the aforementioned key mechanism, whereby only SU devices which successfully descramble the relevant field are allowed to use the PU resource.

It will be understood that the aforementioned mechanism for allowing the use of certain pre-defined PU resource can be applied more generally than to just the bitmap of the EAB procedure. In particular, the procedure for radio resource sharing in the same radio spectrum can be generally defined as follows: 1) The PU system broadcasts a SIB with the EAB parameters that allows only certain access parameters to access the network for a certain defined period of time; 2) SU devices are all defined to be a certain access class which can use the PU network for initial access; and 3) After initial access, the SU system is informed via either a direct or indirect link of the necessary resources to continue PU radio resource access.

One advantage of this procedure is that the SU device does not have to have a fully capable receiver for the PU radio access scheme, since only the broadcast of the SIBs from the PU system needs to be decoded. This represents a considerable cost saving in the design of the SU device. Embodiments include the use of a paging signal to wake up devices from Idle mode and then as part of the device wake up procedure, the devices check for specific SIBs that enable a particular (pre-defined) class of device to initially access PU radio resources.

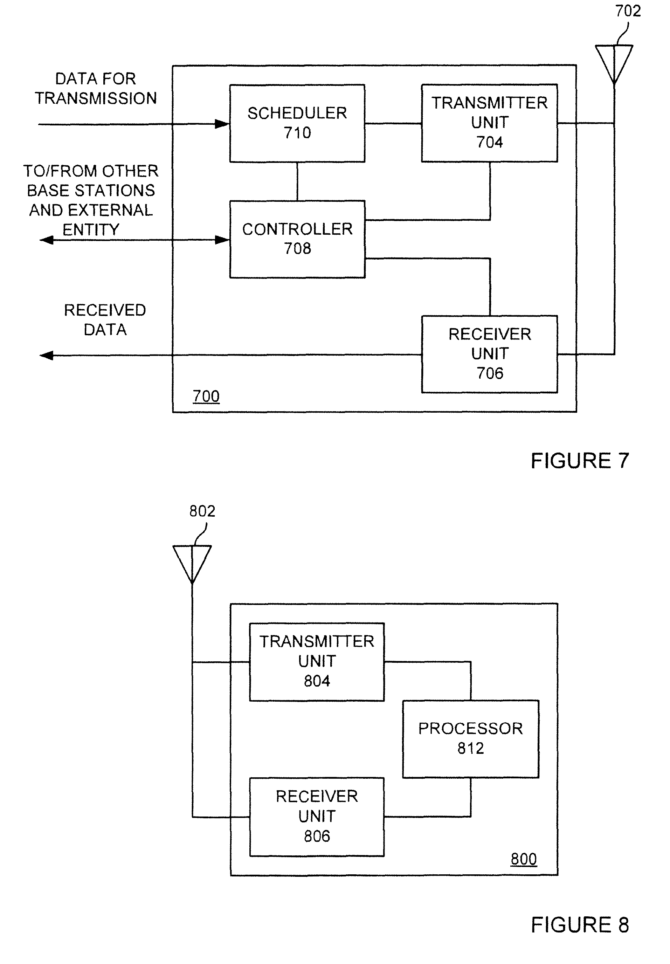

Figure 7 schematically illustrates a base station 700 in accordance with an embodiment. The base station 700 comprises an antenna array 702 coupled to a transmitter unit 704 and a receiver unit 706, which respectively transmit and receive data under the control of controller 708. The controller 708 may send information regarding its radio resources to the SU system and/or the external entity by wired or wireless connection. Scheduler 710 is responsible for allocating radio resources for transmission of data to associated devices. It will be understood that in some cases, scheduling may be performed by a central scheduling entity that may be implemented by a third party not directly controlling either of the PU or SU systems. Such an entity may comprise a processor and a memory storing executable instructions which when executed by the processor cause the entity to perform the radio resource allocation operations described herein. The central scheduling entity may also comprise a storage medium configured to store radio resource information and a communications unit configured to establish a wired or wireless connection to the radio communications systems.

Figure 8 schematically illustrates a terminal 800 in accordance with an embodiment. The terminal 800 comprises antenna 802, which may comprise multiples antennas, coupled to a transmitter unit 804 and a receiver unit 806, which transmit and receive data, respectively, under control of processor 812.

The various logical blocks of the base station and terminal may be implemented as a general purpose processor, a digital signal processor (DSP), an application specific integrated circuit (ASIC), a field programmable array (FPGA) or other programmable logic device, discrete gate or transistor logic, discrete hardware components, or any combination thereof designed to perform the functions described herein.

Either the base station 700, the terminal 800, or both may be reconfigurable in terms of parameters such as operating frequency, bandwidth, or Radio Access Technology (RAT).

Embodiments also provide a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

Advantages of embodiments of the present invention include efficient use of radio access network resources for machine-type communications. Also, the impact on the radio access network performance that is caused by the large number of devices using the secondary spectrum is minimised.

The above description has referred to first and second systems; however, the present invention is not limited to use with two systems. For example there may be multiple PU systems which make available resources to the SU devices.

Although the PU and SU have been described above as licensed and unlicensed with respect to a certain radio frequency spectrum, this is not essential and the method of the invention can be applied among multiple systems regardless of whether each is licensed or unlicensed, so long as it can be established which are primary and which are secondary users of the spectrum.

Whilst the above description has referred to SU devices, it is not essential for every individual SU device to perform the steps described. For example, a group of SU devices may include "master" and "slave" devices, the "master" device performing the steps required to access PU resources and then passing on the information obtained to the "slave" devices.

While embodiments of the invention have been described above, it will be recognized and understood that various modifications may be made, and the appended claims are intended to cover all such modifications that may fall within the spirit and scope of the invention.

## Claims

1. A method for managing radio resources among first and second radio communication systems, the method comprising:
communicating, by the first radio communication system, first scheduling information indicative of radio resources of the first radio communication system potentially available for use by devices of the second radio communication system;
communicating, by the first radio communication system or by an entity external to the first and second radio communication systems, additional information pertaining to usage of said radio resources by one or more devices of the second radio communication system; and
accessing, by said one or more devices of the second radio communication system, radio resources of the first radio communication system in accordance with the first scheduling information and additional information.

2. A method according to claim 1, wherein said additional information is transmitted on a control channel of the first radio communication system.

3. A method according to claim 1 or claim 2, wherein said additional information is transmitted to said one or more devices of the second radio communication system in response to a request by said one or more devices of the second radio communication system.

4. A method according to any one of claims 1 to 3, wherein said additional information is transmitted to a terminal device of the second radio communication system.

5. A method according to any one of claims 1 to 3, wherein said additional information is transmitted to a base station device of the second radio communication system.

6. A method according to claim 1, wherein at least said first scheduling information is communicated by the first radio communication system to the entity external to the first and second radio communication systems, said entity allocating radio resources to said one or more devices in response to a request thereby and updating the scheduling information in accordance with said allocating.

7. A method according to any one of the preceding claims, wherein devices of the second system are assigned to at least one access class, either said first scheduling information or said additional information indicating one or more access classes of devices permitted to access radio resources of the first radio communication system.

8. A method according to claim 7, wherein said one or more access classes of devices are determined based on radio resource requirements.

9. A method according to claim 7 or claim 8, wherein at least a portion of said first scheduling information is scrambled, at least one device of said one or more access classes of devices having a key to unscramble at least some of the scrambled scheduling information.

10. A method according to any one of claims 7 to 9, wherein said first scheduling information comprises a system broadcast information message in a Long Term Evolution system.

11. A method according to any one of the preceding claims, wherein the first radio communication system communicates information specifying devices of the second radio communication system permitted to use said resources in return for assisting users of the first radio communication system.

12. A method according to any one of the preceding claims, further comprising transmitting, by one or more devices of the second radio communication system to the first radio communication system, information indicative of a result of an analysis of said radio resources of the first radio communication system potentially available for use by devices of the second radio communication system.

13. A method according to any one of the preceding claims, wherein devices of the second system comprise machine-type devices.

14. A method for managing radio resources by a base station of a first radio communication system, the method comprising:
communicating first scheduling information indicative of radio resources of the first radio communication system potentially available for use by devices of a second radio communication system; and
communicating additional information pertaining to usage of said radio resources by said devices of said second radio communication system.

15. A method according to claim 14, further comprising:
receiving, from one or more devices of the second radio communication system, information indicative of a result of an analysis of said radio resources performed by said one or more devices of the second radio communication system.

16. A base station for managing radio resources of a first radio communication system, the base station comprising:
means for communicating first scheduling information indicative of radio resources of the first radio communication system potentially available for use by devices of a second radio communication system; and
means for communicating additional information pertaining to usage of said radio resources by said devices of the second radio communication system.

17. A method for accessing radio resources of a first radio communication system by a terminal device of a second radio communication system, the method comprising:
receiving first scheduling information indicative of radio resources of the first radio communication system potentially available for use to gain initial access; and
receiving additional information pertaining to said radio resources to enable continued access to the radio resources.

18. A method according to claim 17, further comprising:
analysing said radio resources; and
transmitting, to said second radio communication system, information indicative of a result of said analysing.

19. A terminal for accessing radio resources of a radio communication system to which the terminal does not belong, the terminal comprising:
means for receiving first scheduling information indicative of radio resources of the radio communication system potentially available for use to gain initial access; and
means for receiving additional information pertaining to said radio resources to enable continued access to the radio resources.

20. A central control entity for use in managing radio resources among first and second radio communication systems wherein the first radio communication system communicates first scheduling information indicative of radio resources of the first radio communication system potentially available for use by devices of the second radio communication system, and wherein the first radio communication system transmits additional information pertaining to usage of said radio resources by one or more devices of the second radio communication system, the central control entity arranged to receive at least said first scheduling information communicated from the first system and to make said first scheduling information available to the second system.
